(19) **Europäisches Patentamt / European Patent Office / Office européen des brevets**

(11) **EP 1 207 368 B1**

(12) # EUROPEAN PATENT SPECIFICATION

(45) Date of publication and mention of the grant of the patent:
**24.10.2007 Bulletin 2007/43**

(51) Int Cl.:
*G01B 21/08* (2006.01)    *G01B 15/02* (2006.01)

(21) Application number: **01127092.3**

(22) Date of filing: **15.11.2001**

(54) **Method for measuring the thickness profile of a flattened tubular film**

Verfahren zum Messen des Dickenprofils einer röhrenförmigen, dünnen Folie

Procédé pour mesurer le profil de l'épaisseur d'une feuille tubulaire mince

(84) Designated Contracting States:
**DE ES FR GB IT**

(30) Priority: **15.11.2000 IT MI002451**

(43) Date of publication of application:
**22.05.2002 Bulletin 2002/21**

(73) Proprietor: **ELECTRONIC SYSTEMS S.P.A.**
**28015 Momo (NO) (IT)**

(72) Inventors:
 • **Saini, Marco**
  **28041 Arona (NO) (IT)**

 • **Nisoli, Maurizio**
  **21052 Busto Arsizio (VA) (IT)**

(74) Representative: **Premru, Rok**
 **Via De Amicis 4**
 **20052 Monza (MI) (IT)**

(56) References cited:
 **US-A- 3 474 160**        **US-A- 3 988 582**
 **US-A- 4 339 403**

EP 1 207 368 B1

**Description**

The object of the present invention is a method for measuring the thickness profile of a flattened tubular film.

In the plastics sector it is known that materials are made of film by means of ring-shaped extruders from which a tubular film comes out, known also as blown film

The extruded tubular film, after having been inflated, is passed through a drawing and flattening device, also known as a castle, in order to obtain a flattened tubular film, that is two superimposed layers of film joined at the edges.

The flattened tubular film is then taken towards a cutting station to be cut at the edges, so as to separate the two superimposed layers of film, obtaining two flat films, with a width substantially equal to half the circumference of the extruded tubular film, which are wound onto reels.

The castle rotates alternately according to a vertical axis; consequently the axis of flattening of the tubular film varies continuously and so the errors in planarity of the film are uniformly distributed on the collecting reels.

This solution therefore guarantees that the reels are free from winding defects such as lumps, badly stretched surfaces, walls that are not straight, etc.

To maintain the thickness profile within the contemplated tolerances, the thickness profile of the extruded tubular film is kept under control and so action is taken locally on the die of the extruder.

US-A-3 474 160 describes a process and an apparatus for measuring the thickness profile of a flattened tubular film advancing parallel to its longitudinal axis and rotating around its longitudinal axis by means of a gauge scanning across the tubular film. The gauge scans in synchronism with the rotation of the flattened tubular and any variations in the signal from the gauge results solely from the thickness variations existing around the sheet 20.

US-A-4 339 403 discloses an apparatus and a method for measuring the thickness of a flattened tubular film extruded from a nozzle ring. The film is divided into equal cross sectional areas, corresponding to the correcting sectors of the nozzle ring and the mean film thickness and the deviation of each sector are thus determined.

US-A-3 988 582 discloses an apparatus and a method for measuring the thickness of a blown film.

The application for a patent MI 98 A 001611 (granted patent IT 1 326 008), by the same applicant, proposes a method and an appliance for measuring the thickness profile of a tubular film.

As described in MI 98 A 001611, a scanning head, located before the cutting station, measures the thickness of the flattened tubular film.

The tubular film is ideally divided into a plurality of longitudinal strips or sectors, familiarly known as "die bolts", all of the same width, each one corresponding to a sector of the extruder die.

A thickness measuring device, preferably of a type without contact, is located between the drawing and flattening station and the cutting station and moves with an alternate linear movement, in a direction transverse to the direction of advance movement of the flattened tubular film, between a first position, to which corresponds a first edge of the flattened tubular film, and a second position, to which corresponds a second edge, opposite the first edge, of the flattened tubular film.

The measuring spot is at less than half the width of the longitudinal strips and the measuring head is synchronised with the rotation of the flattened tubular film, so that in the point corresponding to the opposite edges the reading is taken on two overlapping layers of the same longitudinal strip.

In this way it is sufficient to divide the thickness measured at the edges by two in order to know the thickness of the film corresponding to the longitudinal strips placed at the ends.

After rotation of the castle, the various longitudinal strips are taken, in sequence, to the area corresponding to the side edges and their thickness can be measured.

Moreover, the thickness measurements taken during the movement from one edge to the other may be used to estimate (dividing by two) the thicknesses of the overlapped longitudinal strips in the flattened tubular film.

However, the system described in the application MI 98 A 001611 still presents a few inconvenient aspects.

The thickness measurement is precise only on the end longitudinal strips, while on the intermediate longitudinal strips simply an estimate of the thickness is obtained, which is completely inadequate for the purposes of the control and regulation of the thickness profile of the tubular film.

In order to have an exact measurement of the thickness of each longitudinal strip it is necessary to wait for the castle to turn through 180°, which corresponds to an average time of between 2.5 and 10 minutes approximately; so the die regulation speed is very low.

Since the tubular film runs at a speed between 8 and 5 metres/minute, if the measurements go outside the contemplated tolerances between two successive updates, there is the risk that the system may produce considerable quantities of rejects.

To obtain a reliable measurement it is also necessary for the measuring head to remain for sufficient time on each longitudinal strip, avoiding distortion of the measurement by measuring noise (for example with a β ray sensor it must remain for a time of about 0.5 seconds).

If the flattened tubular film is very wide, it may happen that the measuring device does not manage to reach the opposite edge in time to measure another folded longitudinal strip; in this case synchronism is lost and the time taken to obtain the thickness profile is doubled.

In conclusion, the reliability of measurement may be drastically decreased.

The aim of the present invention is to find a solution to the problems mentioned above.

Said problems are solved by means of a procedure conforming with the dictate of the independent claim.

The procedure to which the invention refers will be immediately made clear by the following description, provided as an example without limitation, with reference to the enclosed figures in which:

- Figure 1 is a schematic view of a system for producing material in film;
- Figure 2 1 is a schematic view of a flattened tubular film scanned with an alternate linear movement, in a direction at a right angle to the direction of advance movement of the film.

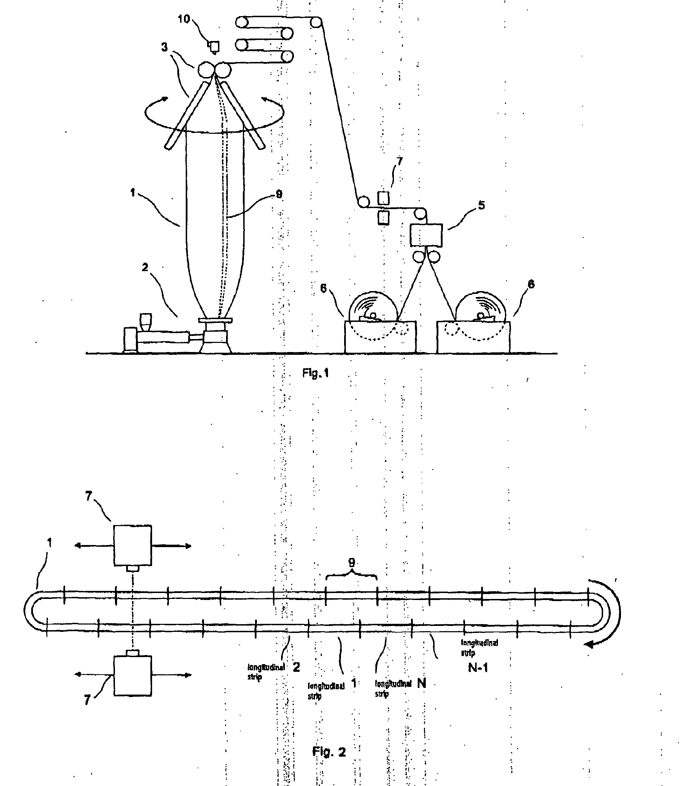

With reference to the drawings, figure 1 shows, schematically, a system for the production of a tubular film 1, comprising an extruder 2, a flattening and drawing device 3, a cutting station 5 and two stations 6 for winding the film onto reels.

Between the flattening and drawing station and the cutting station 5 there are means for measuring thickness 7, for example a source of $\beta$ rays and a $\beta$ ray sensor, arranged in such a way as to define a space for the passage of the tubular film.

The means 7 move with an alternate linear movement, performing continuous scanning in a direction transverse to the direction of advance movement of the film.

In a possible embodiment the means 7 perform the thickness measurements at intervals of about 5 mm.

The tubular film 1, or blown film, is ideally divided into a certain number of longitudinal strips 9, all of the same width, also called "die bolts", each one corresponding to a sector of the extruder die; typically, the number **n** of longitudinal strips is between 8 and 360 and their width ranges from 1 to 30 cm approximately.

The movement of the measuring means 7 and the rotation of the flattening and drawing device 3 cause continuous changing of the combination of longitudinal strips 9 measured by the means 7 (see figure 2).

Means 10, for example an encoder, continuously supply the angular position of the flattening and drawing device 3, from which may be obtained the present arrangement of the longitudinal strips 9 and, in particular, the longitudinal strips 9 momentarily situated on the measuring axis of the means 7.

If we use the unknowns $X_1...X_n$ to indicate the thicknesses of the **n** longitudinal strips 9, each thickness measurement of the measuring device 7 may be considered as a linear equation of the type

$$X_{up} + X_{down} = M$$

where: *up* and *down* are the indices of the overlapping longitudinal strips and *M* is the thickness measurement.

The set of **m** thickness measurements collected in one or more complete scans of the measuring device 7 on the flattened tubular film may therefore be considered as a system of linear equations in the same unknowns $X_1...X_n$ of the type

$$\begin{cases} X_{up1} + X_{down1} = M_1 \\ X_{up2} + X_{down2} = M_2 \\ ... \\ X_{up\,m} + X_{down\,m} = M_m \end{cases}$$

With each scan of the measuring device 7 from about 100 to 400 thickness measurements are taken, but these are not always sufficient to obtain a solvable system of equations.

To have the certainty that the system of equations has a solution, it is necessary to consider the measurements collected in several scans (from 2 to 20, as better described below).

The resulting system of equations is typically hyperconstrained, that is it has no exact solution.

However, it is possible to find an approximate solution which satisfies the system of equations fairly well.

In particular, it is possible to use the least squares method to find the values of the unknowns that give the minimum value of the merit figure

$$J(x) = \Sigma_i (M_i - X_{up} - X_{down})^2$$

and, therefore, give a satisfactory solution to the hyperconstrained system of equations.

Applying the theory of the least squares method, the thickness of the individual longitudinal strips 9 of the tubular film 1 are therefore calculated with the formula

$$X = (\Phi^T \Phi)^{-1} \Phi^T Y$$

where

$$\Phi = \begin{vmatrix} \varphi_{11} & \varphi_{12} & \cdots\cdots & \varphi_{1n} \\ \varphi_{21} & & \cdot & \cdot \\ \cdot & & & \\ \cdots\cdots\cdots\cdots\cdots & & \varphi_{mn} \end{vmatrix}$$

is the matrix of the coefficients of the system of equations with n columns and m lines, where **n** corresponds to the number of longitudinal strips in the tubular film and m to the number of measurements made.

Each line in the matrix contains only two coefficients equal to 1 which represent the two overlapping longitudinal strips measured, while the remaining coefficients are null; if the longitudinal strip measured is folded over on itself, the line contains only one non null coefficient which has a value 2.

$$Y = \begin{vmatrix} y_1 \\ \cdot \\ y_m \end{vmatrix}$$

is a column matrix of **m** lines containing the values of the measurements made.

$$X = \begin{vmatrix} x1 \\ \cdot \\ xn \end{vmatrix}$$

is the column matrix of the unknowns.

Alternatively, it is possible to use the weighted least squares method according to the following formula:

$$X = (\Phi^T P \Phi)^{-1} \Phi^T PY$$

where P is a diagonal matrix of m lines for m columns which on the diagonal shows the number of times a certain pair of longitudinal strips has been measured.

Typically the matrices $\Phi$ and Y collect the data of a number of scans between 2 and 20.

To assist the precision of measurement of the thickness profile, the thickness profile must be calculated with numerous scans, while to assist rapid regulation of the die it is sufficient to calculate the profile with a few scans.

To perform calculation of the matrix the system for the regulation and control of the extruder 2 provides a suitable software program.

The methods of calculation for obtaining the transposed matrix $\Phi^T$ and the inverse matrix $(\Phi^T P \Phi)^{-1}$ may be chosen from among the various known methods.

An important advantage of the method described is the speed with which the thickness profile of the tubular film is obtained.

The first profile is obtained with the measurements taken in two scans of the measuring device 7, which are typically completed in 20-60 seconds.

The profile is then updated at the end of each scan, typically every 10-30 seconds, using also the measurements taken in the previous scans for the calculations.

The expert reader in the sector will also appreciate that, thanks to the method described, there is no further need for synchronism between the movement of the measuring device 7 and the rotation of the flattening and drawing system 3 because it is no longer necessary to measure the thickness of the longitudinal strips folded at the edges.

Moreover the thickness of each longitudinal strip is calculated on the basis of a much larger number of measurements, so there is improved sensitivity to disturbances, errors and noise of the thickness measurement.

**Claims**

1. Method for measuring the thickness profile of a flattened tubular film, advancing parallel to its own longitudinal axis and rotating around its own longitudinal axis, comprising the stages of:

   - ideally dividing the film (1) into a plurality **n** of longitudinal strips (9) parallel to the axis of the tubular film;
   - using a thickness measuring device (7) to perform at least one scan in a direction transverse to the direction of advance movement of the tubular film (1), so as to perform **m** thickness measurements, said at least one scan being performed without synchronism with the rotation of the flattened tubular film (1);
   - for each thickness measurement made during the scan, identifying the overlapping longitudinal strips (9) on the axis of measurement of the thickness measuring device (7);
   - obtaining a hyperconstrained system of **m** linear equations with **n** unknowns of the type $X_{up}$

+ $X_{down}$ = M, where up and down are the indices of the overlapping longitudinal strips and M is the thickness measurement;

- using the least squares method or the weighted least squares method for solving the hyperconstrained system, thus obtaining the thickness of the individual longitudinal strips (9).

## Patentansprüche

1. Verfahren zur Messung des Dickenprofils einer flach gemachten, röhrenförmigen Folie, die sich parallel zu ihrer Längsachse vorwärts bewegt und sich um ihre Längsachse umläuft, umfassend die Schritte:

   - ideelles Aufteilen der Folie (1) in eine Mehrzahl **n** von Längsstreifen (9) parallel zur Achse der röhrenförmigen Folie;
   - Verwenden einer Dickenmessvorrichtung (7), um mindestens einen Abtastvorgang in einer quer zur Richtung der Vorwärtsbewegung der röhrenförmigen Folie verlaufenden Richtung durchzuführen, in der Weise, dass **m** Dickenprofilmessungen durchgeführt werden, wobei der mindestens eine Abtastvorgang ohne Synchronisation zur Umlaufbewegung der flach gemachten, röhrenförmigen Folie durchgeführt wird;
   - Ermitteln der sich überlappenden Längsstreifen (9) auf der Messachse der Dickenmessvorrichtung (7) für jede während des Abtastvorgangs gemachte Dikkenmessung;
   - Erhalten eines überbestimmten Systems von **m** linearen Gleichungen mit **n** Unbekannten des Typs $X_{oben}$ + $X_{unten}$ = M, wobei oben und unten die Indizes der sich überlappenden Längsstreifen sind und M die Dickenmessung ist;
   - Anwenden der Methode der kleinsten Quadrate oder der Methode der gewichteten kleinsten Quadrate um das überbestimmte System zu lösen, somit die Dicke der einzelnen Längsstreifen (9) zu erhalten.

## Revendications

1. Procédé pour mesurer le profil de l'épaisseur d'une feuille tubulaire mince, avançant de façon parallèle à son propre axe longitudinal et tournant autour de son propre axe longitudinal, comprenant les étapes de :

   - division idéale de la feuille (1) dans une pluralité n de bandes longitudinales (9) parallèles à l'axe de la feuille tubulaire mince ;
   - utilisation d'un dispositif de mesure d'épaisseur (7) pour exécuter au minimum un balayage dans une direction transversale à la direction de mouvement d'avancée de la feuille tubulaire mince (1), afin d'exécuter m mesures d'épaisseur, ledit balayage minimum étant exécuté sans synchronisation avec la rotation de la feuille tubulaire mince (1) aplanie ;
   - pour chaque mesure d'épaisseur faite pendant le balayage, identifiant les bandes longitudinales (9) se chevauchant sur l'axe de mesure du dispositif de mesure d'épaisseur (7) ;
   - obtention d'un système hypercontraint de m équations linéaires avec n inconnues du type $X_{supérieur}$ + $X_{inférieur}$ = M, où supérieur et inférieur sont les indices des bandes longitudinales superposées et M est la mesure d'épaisseur;
   - utilisation de la méthode des carrés minimum ou la méthode des carrés de poids minimum pour résoudre le système hypercontraint, ainsi obtenir l'épaisseur des bandes longitudinales individuelles (9).

Fig. 1

Fig. 2

longitudinal
strip 2

longitudinal
strip 1

longitudinal N
strip

longitudinal
strip
N-1

**EP 1 207 368 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 3474160 A
- US 4339403 A
- US 3988582 A
- IT 1326008